# EUROPÄISCHE PATENTANMELDUNG

(11) **EP 4 450 785 A1**
(43) Veröffentlichungstag der Anmeldung: **23.10.2024**
(21) Anmeldenummer: 24168666.6
(22) Anmeldetag: 05.04.2024
(51) Int. Cl.: F02C 3/30, F02C 7/32

(54) **ANTRIEBSSYSTEM UND FLUGZEUG MIT EINEM ANTRIEBSSYSTEM**

(30) Priorität: 21.04.2023 DE 102023110273; 24.11.2023 DE 102023132900
(71) Anmelder: MTU Aero Engines AG, 80995 München (DE)
(72) Erfinder: Bolgar, Istvan, 80995 München (DE); Woitalka, Alexander, 80995 München (DE)

(57) **Zusammenfassung**

Die Erfindung betrifft ein Antriebssystem (10) mit einer insbesondere als Flugtriebwerk ausgebildeten Gasturbine (1), wobei die Gasturbine (1) einen Kernstromkanal (1c) aufweist, in dem in Strömungsrichtung zumindest ein Verdichter (2), insbesondere eine Mischkammer (3a), eine Brennkammer (3) und eine Turbine (4) angeordnet sind, und einem Dampfsystem (20) zu einer Ausscheidung von Wasser aus einem Abgasstrom des Kernstromkanals (1c), zu einer Erzeugung von Wasserdampf und zu einer Förderung des Wasserdampfs, insbesondere über die Mischkammer (3a), in die Brennkammer (3). Ein Antriebssystem (10), dessen Wirkungsgrad erhöht ist, wird erfindungsgemäß dadurch geschaffen, dass das Dampfsystem (20) mit einem separaten Kühlsystem (30) gekoppelt ist, um durch Aufnahme und Abfuhr von Wärme zu der Ausscheidung des Wassers für die Erzeugung des Wasserdampfes aus einem Abgasstrom des Kernstromkanals (1c) beizutragen.

## Beschreibung

Die Erfindung betrifft ein Antriebssystem mit einer insbesondere als Flugtriebwerk ausgebildeten Gasturbine, wobei das Flugtriebwerk einen Kernstromkanal aufweist, in dem in Strömungsrichtung zumindest ein Verdichter, insbesondere eine Mischkammer, eine Brennkammer und eine Turbine angeordnet sind, und mit einem Dampfsystem zu einer Ausscheidung von Wasser aus einem Abgasstrom des Kernstromkanals, zu einer Erzeugung von Wasserdampf und zu einer Förderung des Wasserdampfs, insbesondere über die Mischkammer, in die Brennkammer. Die Erfindung betrifft ferner ein Flugzeug mit einem solchen Antriebssystem.

Beim Start und beim Steigflug derartiger Antriebssysteme ist es eine Herausforderung, genug Wasser zurückzugewinnen, um einen offenen Cheng-Kreislauf aufrechtzuerhalten. Aus diesem Grund müssen für diese Flugphasen große Mengen an Wasser in Tanks mitgeführt werden. Ferner sind gegenüber einem herkömmlichen Flugtriebwerk eine Vielzahl von zusätzlichen Komponenten unterzubringen, was die Integration in das Antriebsystem und des Antriebsystems in das Flugzeug erschwert. Von Seiten des Flugzeugrumpfdesigns ist eine Konfiguration bevorzugt, die möglichst nahe an herkömmliche Flugtriebwerke heranreicht, was die Größe, den Schwerpunkt und das Anströmverhalten am Flügel betrifft.

Des Weiteren ist es in einem turbomaschinenbasiertem Flugtriebwerk herausfordernd, die Strömung des Kern- und Nebenstroms innerhalb der Anforderungen an die Druckverluste und das Bauvolumen des Triebwerks durch die Wärmetauscher eines Cheng-Kreislaufes zu führen. Dies betrifft vor Allem den Kondensator des Dampfsystems, durch welchen die Kombination des Abgases und des Kondensats durch einen Kühlstrom aus dem Nebenstrom oder der Stauluft gekühlt wird.

Es ist daher die Aufgabe der Erfindung ein Antriebssystem und ein Flugzeug anzugeben, deren Wirkungsgrade weiter erhöht sind.

Ein erfindungsgemäßes Antriebssystem umfasst eine insbesondere als Flugtriebwerk ausgebildete Gasturbine, wobei die Gasturbine einen Kernstromkanal aufweist, in dem in Strömungsrichtung zumindest ein Verdichter, insbesondere eine Mischkammer, eine Brennkammer und eine Turbine angeordnet sind, sowie ein Dampfsystem zu einer Ausscheidung von Wasser aus einem Abgasstrom des Kernstromkanals, zu einer Erzeugung von Wasserdampf und zu einer Förderung des Wasserdampfs, insbesondere über die Mischkammer, in die Brennkammer.

Die Aufgabe wird von dem erfindungsgemäßen Antriebssystem des Anspruchs 1 dadurch gelöst, dass das Dampfsystem mit einem separaten Kühlsystem gekoppelt ist, um durch Aufnahme und Abfuhr von Wärme zu der Ausscheidung des Wassers für die Erzeugung des Wasserdampfes aus einem Abgasstrom des Kernstromkanals beizutragen. Durch die Kopplung wird die Wärmeabfuhr verbessert, damit die Wasserausscheidung erhöht und somit die mögliche Dampferzeugung gesteigert, was den Gesamtwirkungsgrad vorteilhaft erhöht.

Das Dampfsystem kann eine Wasserabscheidevorrichtung, einen Verdampfer, der als Wärmetauscher ausgebildet sein kann, sowie eine Dampfturbine aufweisen. Ein Wasserabscheidevorrichtung kann dazu ausgebildet sein, Wasser aus dem Abgas des Kernstromkanals zu kondensieren. Das Wasser kann dann in den Verdampfer geleitet werden, der die Abwärme aus dem Abgas aus dem Kernstromkanal nutzt, um das Wasser zu verdampfen. Der insbesondere überhitzte Dampf kann dann in die Dampfturbine geleitet werden, um zusätzliche mechanische Energie für das Antriebssystem zu gewinnen. Die Dampfturbine kann durch ein Getriebe an eine Welle der Gasturbine gekoppelt sein. Schließlich kann der Dampf in eine Mischkammer und/oder direkt in die Brennkammer geführt werden, um die spezifische Leistung des Flugtriebwerks zu erhöhen.

Weitere Vorteile und Merkmale ergeben sich aus der nachfolgenden Beschreibung einiger bevorzugter Ausführungsbeispiele sowie den abhängigen Ansprüchen.

In einer vorteilhaften Ausführungsform des Antriebssystems ist das Kühlsystem geschlossen ausgebildet. Dadurch wird vorteilhaft das Kühlmittel erhalten, was zu geringeren Kosten und einer verringerten Komplexität führt. Hierzu kann das Kühlsystem ein Reservoir für das Kühlmittel aufweisen. Das Kühlmittel kann in dem Kühlsystem durch eine Pumpe zirkuliert werden. Die Pumpe kann elektrisch oder mechanisch durch eine Welle der Gasturbine oder eine Dampfturbinenwelle der Dampfturbine angetrieben werden. Ein zusätzlicher Vorteil ergibt sich beim Take-off, wenn das System so geregelt wird, dass das Kühlmittel und das Reservoir als Wärmesenke genutzt werden, sich also im Laufe des Take-Offs erhitzen.

In einer weiteren vorteilhaften Ausführungsform des Antriebssystems weist das Dampfsystem zumindest einen Verdampfer und das Kühlsystem einen Wärmetauscher auf, und wobei der Wärmetauscher in einem Abgasstrom des Kernstromkanals hinter oder neben dem Verdampfer angeordnet sein kann. Dadurch wird der Wasser enthaltende Abgasstrom auf eine niedrigere Temperatur gekühlt und so die relative Luftfeuchtigkeit in dem Abgasstrom erhöht, so dass die Ausscheidung von Wasser vorteilhaft verbessert wird. Durch die Anordnung hinter oder neben dem Verdampfer wird der Verdampfungsprozess in dem Verdampfer vorteilhaft ausgenutzt, bevor der Abgasstrom weiter gekühlt wird. Der Wärmetauscher kann vorzugsweise ein Kondensator sein. Bevorzugt kann der Massestrom des Kühlfluids des Wärmetauschers genutzt werden, um das Antriebssystem hinsichtlich seiner thermischen Lasten vorteilhaft zu regeln. Das Antriebssystem kann also ein Regelungssystem und/oder eine Regelungsvorrichtung aufweisen. Die Regelungsvorrichtung kann insbesondere die oben erwähnte Pumpe sein.

In einer weiteren Ausführungsform des Antriebssystems nutzt das Kühlsystem ein Kühlmittel und weist einen Hilfskühler zur Kühlung des Kühlmittels auf. Durch einen Hilfskühler wird vorteilhaft die Fähigkeit des Kühlsystems zur Kühlung des Abgasstroms verbessert. Dabei kann das Kühlmittel insbesondere in dem Kühlsystem zirkulieren, insbesondere, wenn das Kühlsystem insgesamt geschlossen ausgebildet ist, so dass die Kühlfähigkeit weiter erhöht wird und vorteilhaft nur eine minimale Menge Kühlmittel mitgeführt werden muss. Das Kühlmittel kann ein Ethylenglykol-Wasser-Gemisch oder Wasser sein. Der Hilfskühler kann als Wärmetauscher insbesondere in einer Kreuzgegenstromarchitektur ausgeführt sein. Dies bedingt eine geringere NTU ("Number of Transfer Units") bei gleichem Wirkungsgrad sowie geringere Druckverluste auf der Kaltseite des Wärmetauschers.

In einer bevorzugten Weiterbildung des Antriebssystems kann der Hilfskühler zur Kühlung des Kühlmittels in der Gasturbine angeordnet sein. Durch eine Anordnung des Hilfskühlers in der Gasturbine kann die Länge der Rohrleitungen zum Transport des Kühlmittels zu dem Wärmetauscher des Kühlsystems minimiert sein, so dass Verlustleistungen vorteilhaft minimiert sind und die Herstellung des Antriebssystems zu geringeren Kosten erfolgen kann.

In einer besonders bevorzugten Weiterbildung des Antriebssystems ist der Hilfskühler in und/oder an dem Nebenstromkanal und/oder in und/oder an einem Rohrleitungssystem der Gasturbine angeordnet ist. Durch eine zumindest teilweise Anordnung des Hilfskühlers in und/oder an dem Nebenstromkanal kann auf vorteilhaft einfache Weise ein Luftstrom des Nebenstroms ausgenutzt werden, um die Wärme aus dem Kühlsystem abzuführen. Auch eine zumindest teilweise Anordnung des Hilfskühlers in und/oder an einem Rohrleitungssystem der Gasturbine kann dazu genutzt werden, um die Abwärme aus dem Kühlsystem vorteilhaft gezielt auszuleiten, wobei vorteilhaft gleichzeitig auch eine Erwärmung von Gasen oder Flüssigkeiten in dem Rohrsystem erfolgen kann, um deren Viskosität vorteilhaft gezielt durch Temperaturanpassung beeinflussen zu können.

In einer alternativen Weiterbildung des Antriebssystems kann der Hilfskühler zur Kühlung des Kühlmittels in einer externen Zusatzgondel außerhalb der Gasturbine angeordnet sein. Durch die Anordnung des Hilfskühlers in einer Zusatzgondel kann die Kühlung des Kühlmittels effizienter gestaltet werden, da die in der Hauptgondel herrschenden relativ hohen Temperaturen keinen Einfluss auf die Kühlung haben und die niedrigere Umgebungstemperatur im Flug genutzt werden kann, um die Abwärme abzuführen. Ferner wird durch die räumliche Trennung die Herstellung und Ausgestaltung einer Hauptgondel des Flugtriebwerks trotz Vorhandensein des Kühlsystems vorteilhaft vereinfacht.

In einer besonderen Weiterbildung kann zumindest ein Zusatzrotor (Verdichter) zur Kühlung des Hilfskühlers stromaufwärts und/oder stromabwärts des Hilfskühlers angeordnet sein. Eine solche aktive Kühlvorrichtung erzielt vorteilhaft eine bessere Kühlleistung des Hilfskühlers, so dass größere Wärmemengen abgeführt werden können und der Anteil an ausgeschiedenem Wasser in dem Wärmetauscher erhöht werden kann. Der zumindest eine Zusatzrotor kann insbesondere in der Zusatzgondel Teil eines Verdichters, eines Antriebs und/oder eines Gebläses sein. Es können auch eine Mehrzahl an Zusatzrotoren vorgesehen sein.

Besonders bevorzugt kann der Hilfsrotor von einer Dampfturbine des Dampfsystems angetrieben sein. Dadurch werden das Dampfsystem und das Kühlsystem vorteilhaft stärker ineinander integriert und die Kühlleistung des Kühlsystems gleichzeitig erhöht. Der Hilfsrotor kann insbesondere auf einer Dampfturbinenwelle der Dampfturbine angeordnet sein. Die Längsachse der Dampfturbinenwelle kann bevorzugt radial zu einer Längsachse einer Welle des Flugtriebwerks beabstandet angeordnet sein kann.

Darüber hinaus kann das Antriebssystem dadurch weitergebildet sein, dass der Hilfsrotor von einem Elektromotor angetrieben ist. Die Verwendung eines Elektromotors gestattet vorteilhaft eine besonders einfache Regelung des Hilfsrotors sowie eine vorteilhaft frei wählbare Anordnung des Hilfsrotors und des Elektromotors in dem Antriebssystem, was die Auslegung des Antriebssystems vorteilhaft vereinfacht.

In einer vorteilhaften Weiterbildung des Antriebssystems ist vorgesehen, dass der Elektromotor an ein elektrisches System angeschlossen und/oder Teil des elektrischen Systems ist, dass das elektrische System elektrisch von einem Generator versorgt ist, und dass der Generator von einer Dampfturbine des Dampfsystems oder von der Turbine des Flugtriebwerks angetrieben ist. Auch diese Ausführungsform ermöglicht eine einfache Integration des Dampfsystems und des Kühlsystems in die vorhandene Architektur des Antriebssystems. Dabei kann insbesondere bei einer Verwendung einer Pumpe in dem Kühlsystem vorgesehen sein, dass die Pumpe an das elektrische System angeschlossen ist und von dem elektrischen System mit Strom versorgt wird.

Ein weiterer Aspekt der Erfindung betrifft ein Flugzeug mit einem der oben beschriebenen Antriebssysteme, wobei die Gasturbine ein Flugtriebwerk ist.

In einer weiteren Ausführungsform des Flugzeugs mit einem Rumpf und mit einem Antriebssystem, das mit einem in einer Zusatzgondel angeordneten Hilfskühler ausgebildet ist, ist vorgesehen, dass die Zusatzgondel an oder unter dem Rumpf angeordnet ist. Dadurch kann ein zusätzlicher Luftwiderstand und zusätzliches Gewicht an den Flügeln vermieden werden. Ferner kann eine insbesondere zentriert an dem Rumpf angeordnete Zusatzgondel mit dem Hilfskühler sämtliche Flugtriebwerke gleichzeitig mit einer Kühlung versorgen. Die Zusatzgondel kann in den Rumpf integriert sein und/oder Teil eines Rumpfgehäuses des Rumpfes sein.

In einer bevorzugten Ausführungsform des Flugzeugs umfassend einen Flügel und ein Antriebssystem, das mit einem in einer Zusatzgondel angeordneten Hilfskühler ausgebildet ist, kann vorgesehen sein, dass die Zusatzgondel an oder unter dem Flügel, insbesondere an einem Pylon, angeordnet ist.

Ergänzend kann in einer weiteren Ausführungsform des Flugzeugs vorgesehen sein, dass die Zusatzgondel in Querrichtung weiter von einer Längsachse des Flugzeugs entfernt angeordnet ist als die Gasturbine.

Die Erfindung wird bezüglich der nachfolgenden Zeichnungen anhand einiger bevorzugter Ausführungsbeispiele der Erfindung näher erläutert.
- Fig. 1: zeigt ein erstes Ausführungsbeispiel eines erfindungsgemäßen Antriebssystems in einer schematischen Draufsicht
- Fig. 2: zeigt ein zweites Ausführungsbeispiel eines erfindungsgemäßen Antriebssystems in einer schematischen Draufsicht
- Fig. 3: zeigt ein drittes Ausführungsbeispiel eines erfindungsgemäßen Antriebssystems in einer schematischen Draufsicht
- Fig. 4: zeigt ein viertes Ausführungsbeispiel eines erfindungsgemäßen Antriebssystems in einer schematischen Draufsicht
- Fig. 5: zeigt ein fünftes Ausführungsbeispiel eines erfindungsgemäßen Antriebssystems in einer schematischen Draufsicht
- Fig. 6: zeigt ein sechstes Ausführungsbeispiel eines erfindungsgemäßen Antriebssystems in einer schematischen Draufsicht
- Fig. 7: zeigt ein erstes Ausführungsbeispiel eines erfindungsgemäßen Flugzeuges mit einem erfindungsgemäßen Antriebssystem
- Fig. 8: zeigt ein zweites Ausführungsbeispiel eines erfindungsgemäßen Flugzeuges mit einem erfindungsgemäßen Antriebssystem

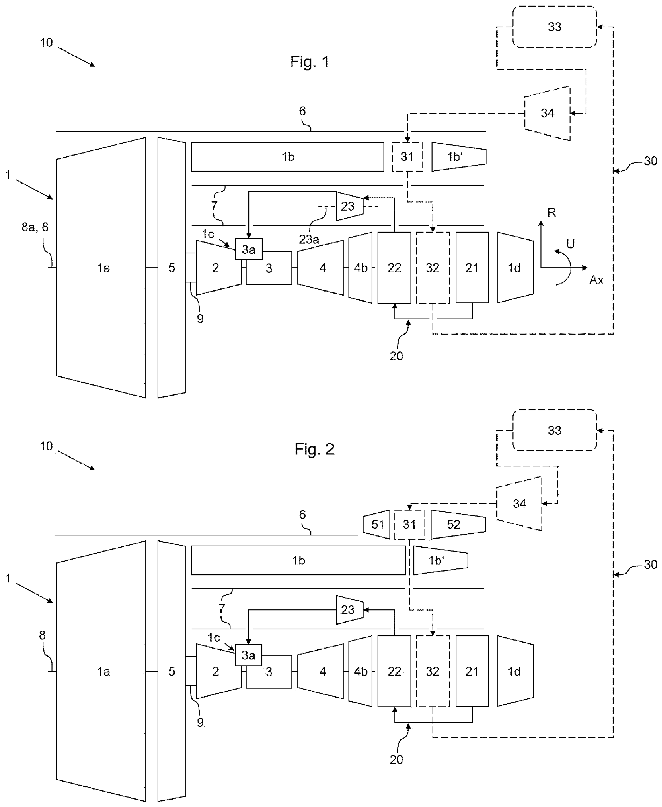

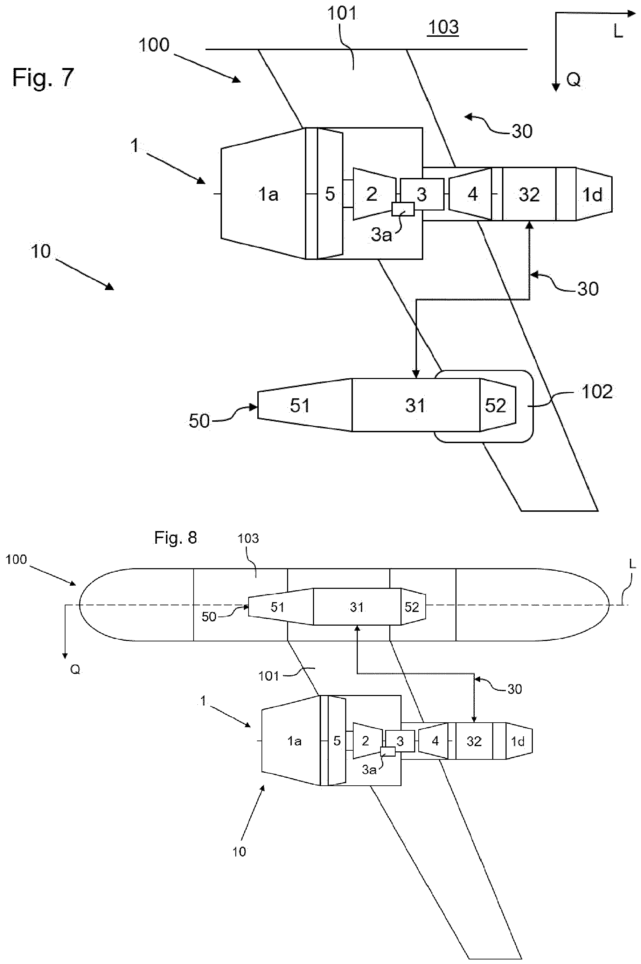

In den Fig. 1 bis Fig. 6 ist jeweils eine als Flugtriebwerk 1 ausgebildete Gasturbine 1 in einem von oben sichtbaren Meridianschnitt schematisch dargestellt. Zunächst werden die Gemeinsamkeiten beschrieben. In den Fig. 7 und 8 sind zwei Ausführungsbeispiele eines erfindungsgemäßen Flugzeuges 100 in einer Draufsicht dargestellt. Das Flugtriebwerk 1 und dessen Komponenten werden in einem wellenfesten Zylinderkoordinatensystem umfassend eine Axialrichtung Ax, eine Radialrichtung R, und eine Umfangsrichtung U beschrieben. Das Flugzeug 100 wird anhand der Längsachse L, der Querachse Q und einer nicht dargestellten Vertikalachse beschrieben. Der Hilfskühlkreislauf 30 ist gestrichelt dargestellt, um die Komponenten der einzelnen Untersysteme besser voneinander unterscheiden zu können.

Das Flugtriebwerk 1 weist in axialer Richtung Ax vorne einen Triebwerkseinlauf 1a auf, aus dem heraus stromabwärts ein Nebenstromkanal 1b und einen Kernstromkanal 1c angeströmt werden. Der Nebenstromkanal 1b dient der Schuberzeugung, der Kernstromkanal 1c dient hauptsächlich der Energieerzeugung für die Komponenten des Flugtriebwerks 1 und/oder von Kabinensystemen eines beispielsweise in Fig. 7 oder 8 dargestellten Flugzeugs 100 mit elektrischer Leistung und Frischluft. In dem Kernstromkanal 1c sind der Reihe nach die Hauptkomponenten des Flugtriebwerks 1 angeordnet, nämlich ein Verdichter 2, eine Brennkammer 3 und eine Turbine 4 mit einer Niederdruckturbine 4b. In dem Triebwerkseinlass 1a kann ein Fan 5 zum Ansaugen und ersten Verdichten von Luft angeordnet sein, wobei ein Teil der von dem Fan 5 angesaugten und verdichteten Luft in den Kernstromkanal 1c strömt, wo sie von dem Verdichter 2 stark verdichtet wird. Das Flugtriebwerk 1 weist ein den Triebwerkseinlauf 1a sowie den Nebenstromkanal 1b umgebendes Außengehäuse 6 und ein den Nebenstromkanal 1b und den Kernstromkanal 1c separierendes Zwischengehäuse 7 auf. Das Außengehäuse 6 bildet ein Nacelle, die auch als Cowling bezeichnet wird. Der Fan 5, der Verdichter 2 sowie die Turbine 4 sind mittels zumindest einer um eine Triebwerksdrehachse 8a drehende Welle 8 mechanisch gekoppelt, wobei der Fan 5 und gegebenenfalls auch (nicht separat dargestellte) vordere Niederdruckverdichterstufen von der schneller laufenden Turbine 4 durch ein Getriebe 9 entkoppelt sein können. In der Brennkammer 3 wird zusätzlich Brennstoff eingemischt und das Brennstoff-Gas-Gemisch gezündet. Darauffolgend wird das heiße Gas aus der Brennkammer 3 in die Turbine 4 geleitet und in der Turbine 4 zum Antrieb der zumindest einen Welle 8 expandiert.

Das Flugtriebwerk 1 weist ein Dampfsystem 20 auf, welches zumindest zu einer Abscheidung von Wasser aus dem Abgasstrom des Kernstromkanals 1c und einer Verdampfung des Wassers ausgebildet ist. Für die Abscheidung des Wassers ist eine als Wärmetauscher ausgebildete Wasserabscheidevorrichtung 21 und für die Verdampfung des Wassers ein Verdampfer 22 vorgesehen, die in dem Abgasstrom des Kernstromkanals 1c angeordnet sind. In den vorliegenden Ausführungsbeispielen gemäß Fig. 1 bis 6 ist zusätzlich eine Dampfturbine 23 vorgesehen, die entweder auf der Welle 8 angeordnet sein oder eine zusätzliche Dampfturbinenwelle 23a aufweisen kann.

In den vorliegenden Ausführungsformen ist eine zusätzliche Mischkammer 3a vor der Brennkammer 3 angeordnet, die stromabwärts von der Dampfturbine 23 und dem Verdichter 3 angeströmt wird und den Dampf sowie die verdichtete Luft mischt und das Luft-Dampf-Gemisch in die Brennkammer 3 leitet. In einer dazu alternativen Ausführungsform kann der Dampf aus dem Dampfsystem 20 auch direkt in die Brennkammer eingespeist werden.

Das heiße Abgas strömt aus der Turbine 4, insbesondere aus der Niederdruckturbine 4b, in und durch die nachfolgenden Komponenten des Dampfsystems 20 und eines erfindungsgemäßen Hilfskühlkreislaufs 30. Das Abgas aus dem Kernstromkanal 1c wird in den vorliegenden Ausführungsbeispielen nicht direkt ausgestoßen, sondern in dem Dampfsystem 20 mit einer Wasserabscheidevorrichtung 21 und einem Verdampfer 22 nachbehandelt, wobei zwischen dem zunächst im Abgasstrom angeordneten Verdampfer 22 und der stromabwärts angeordneten Wasserabscheidevorrichtung 21 ein als Kondensator ausgebildeter Wärmetauscher 32 des Kühlsystems angeordnet ist. Der Wärmetauscher 32 und die Wasserabscheidevorrichtung 21 können gemeinsam als Wasserrückgewinnungssystem 21, 32 bezeichnet werden. Das Wasserrückgewinnungssystem 21, 32 gewinnt Wasser aus dem Abgas des Kernstroms und speist das Dampfsystem 20 mit Wasser. Es kann optional zumindest ein (nicht dargestellter) Wassertank zur Versorgung des Dampfsystems mit Wasser vorgesehen sein. Das Dampfsystem kann ferner optional eine (nicht dargestellte) Wasserpumpe aufweisen, die Wasser zu dem Verdampfer fördert.

Der als Kondensator ausgebildete Wärmetauscher 32 ist vorzugsweise durch ein Kühlmittel gekühlt und insbesondere geschlossen ausgebildet. Um das Kühlmittel zu kühlen ist in den Ausführungsbeispielen ein als Wärmetauscher ausgebildeter Hilfskühler 31 zum Abkühlen des Kühlmittels vorgesehen. Als Kühlmittel kann beispielsweise ein Ethylenglykol-Wasser-Gemisch oder Wasser oder ein anderes geeignete Fluid insbesondere unabhängig von deren Phasenzustand verwendet werden. Der Hilfskühler 31 kann in einer Kreuzgegenstromarchitektur ausgeführt sein.

Das Dampfsystem 20 und der Hilfskühlkreislauf 30 sind in dem ersten Ausführungsbeispiel gemäß Fig. 1 beide vollständig in dem Flugtriebwerk 1 angeordnet. Der Hilfskühlkreislauf 30 kann ferner ein Reservoir 33 für das Kühlmittel und eine Pumpe 34 zur Förderung des Kühlmittels aufweisen.

Dadurch, dass der Wärmetauscher 32 direkt in den Abgasstrom des Kernstromkanals 1c eingebracht ist und das Abgas abkühlt, verbessert sich die Ausfallrate des Wassers in der nachfolgenden Wasserabscheidevorrichtung. Der Wärmetauscher 32 kann in dieser Konfiguration deutlich kleiner gestaltet werden. Dies bedeutet, dass er direkt hinter oder neben den Verdampfer 22 integriert werden kann und nicht in den Nebenstromkanal oder Rohrleitungen ausgelagert werden muss. Dies ermöglicht eine axiale Führung des Kernstroms. Bevorzugt kann der Massestrom des Kühlfluids des Wärmetauschers 32 genutzt werden, um das System hinsichtlich seiner thermischen Lasten vorteilhaft zu regeln.

Im Folgenden werden verschiedene erfindungsgemäße Konfigurationen des Dampfsystems 20 und des Hilfskühlkreislaufs 30 anhand des ersten bis sechsten Ausführungsbeispiels des Antriebssystems 10 gemäß den Fig. 1 bis 6 näher beschrieben.

In dem ersten Ausführungsbeispiel des erfindungsgemäßen Antriebssystems 10 gemäß Fig. 1 ist der Hilfskühler 31 zum Abkühlen des Kühlmediums in dem Nebenstromkanal 1b vor einem Auslass 1b' des Nebenstromkanals 1b angeordnet. Dadurch wird die Luftströmung in dem Nebenstromkanal 1b direkt zur Abgabe von Wärme genutzt. Durch die Erhitzung des Nebenstroms erhöht sich dessen Temperatur und dadurch der Schub des Nebenstroms. Diese Schuberhöhung kann je nach Konfiguration den Druckverlust durch den Wärmetauscher vorteilhaft zumindest teilweise ausgleichen.

Es kann in einer (nicht dargestellten Ausführungsform) auch vorgesehen sein, dass der Hilfskühler 31 in separaten Rohrleitungen oder Kanälen angeordnet und mittels Stauluft und/oder einem zusätzlichen Verdichter mit Umgebungsluft angeströmt wird. Diese separaten Kanäle müssen nicht zwingend eine physikalische Verbindung zum eigentlichen Triebwerk aufweisen.

In dem zweiten Ausführungsbeispiel gemäß Fig. 2 weist das erfindungsgemäße Antriebssystem 10 eine Zusatzgondel 50 mit einem Lufteinlass 51 und einem Luftauslass 52 auf, wobei der Hilfskühler 31 in der im Unterschied zu dem ersten Ausführungsbeispiel in der Zusatzgondel 50 zwischen dem Lufteinlass 51 und dem Luftauslass 52 in dem dortigen Luftstrom angeordnet ist. Die Zusatzgondel 50 kann wie in dem Ausführungsbeispiel dargestellt als Teil des Außengehäuses 6 des Flugtriebwerks 1 ausgebildet sein. Es kann aber auch vorgesehen sein, dass die Zusatzgondel separat und zu dem Flugtriebwerk 1 beabstandet angeordnet ist. Durch die vorteilhafte Anordnung des Hilfskühlers 31 in der Zusatzgondel wird das Kühlmittel gekühlt, ohne dass der Nebenstromkanal 1b angepasst werden muss.

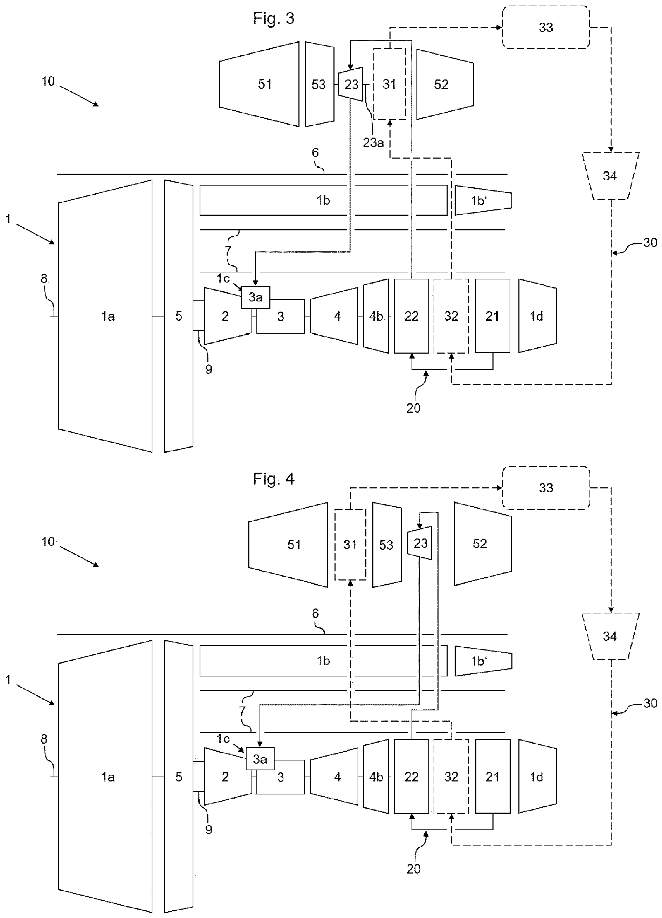

In dem dritten Ausführungsbeispiel gemäß Fig. 3 weist das erfindungsgemäße Antriebssystem 10 ebenfalls eine Zusatzgondel 50 mit einem Lufteinlass 51 und einem Luftauslass 52 auf. Im Unterschied zu dem zweiten Ausführungsbeispiel ist die Zusatzgondel 50 beabstandet zu dem Flugtriebwerk 1 angeordnet. Ferner ist die Dampfturbine 23 in der Zusatzgondel angeordnet und treibt dort über eine Dampfturbinenwelle 23a einen Hilfsrotor 53 an, der den Hilfskühler 31 mit Umgebungsluft anströmt und so vorteilhaft eine sehr hohe Kühlleistung erzielt. Der Hilfsrotor 53 kann beispielsweise ein Verdichter, ein Antrieb oder Gebläse oder ein Teil dieser Apparaturen sein. Ist der Hilfsrotor 53 als Antrieb ausgebildet, so kann die Zusatzgondel 50 vorteilhaft einen Schub erzeugen.

Um den Dampf von der Dampfturbine in die Mischkammer 3a zu transportieren, können Leitungen in einem Flügel 101 des Flugzeugs 100 vorgesehen sein.

Das vierte Ausführungsbeispiel gemäß Fig. 4 entspricht größtenteils dem dritten Ausführungsbeispiel, allerdings ist der Hilfskühler 31 im Unterschied zu dem dritten Ausführungsbeispiel in Strömungsrichtung in der Zusatzgondel 50 vor dem Hilfsrotor 53 angeordnet. Der Hilfsrotor 53 erzeugt einen Sog und zieht vorteilhaft die Umgebungsluft durch den Hilfskühler 31. Dadurch ist der Temperaturunterschied der frischen Umgebungsluft gegenüber dem zu kühlenden Kühlmittel größer, was sich vorteilhaft auf die Wärmeübertragung in dem Hilfskühler 31 auswirkt. Auch in diesem vierten Ausführungsbeispiel wird der Hilfsrotor 53 von der Dampfturbine 23 angetrieben.

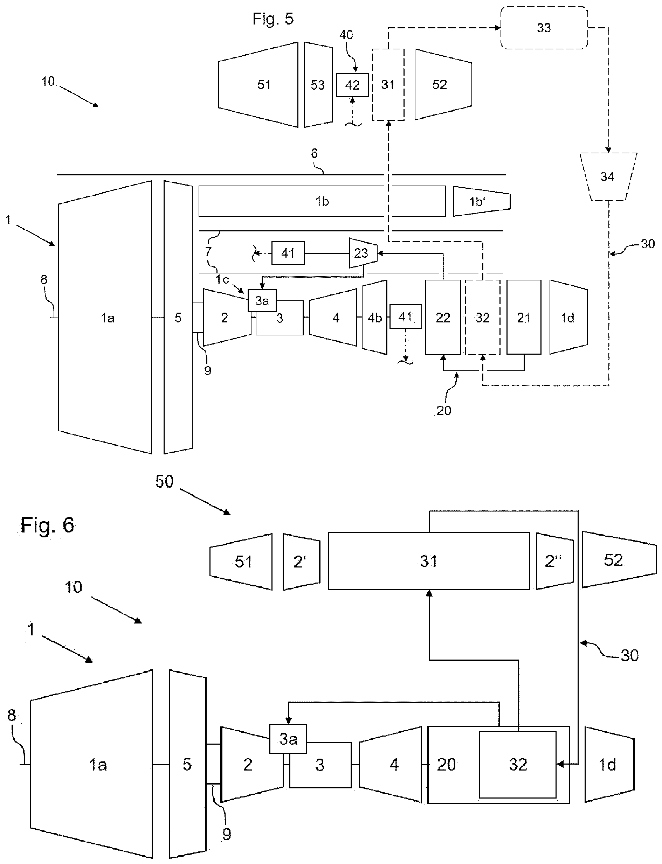

In dem fünften Ausführungsbeispiel des Antriebssystems gemäß Fig. 5 erfolgt der Antrieb des Hilfsrotors 53 durch einen Elektromotor 42 eines elektrischen Systems 40. Das elektrische System 40 bezieht die elektrische Leistung in diesem speziellen Ausführungsbeispiel von zwei Generatoren 41, die zum einen von der Dampfturbine 23 und zum anderen von der Welle 8 des Flugtriebwerks 1 angetrieben werden. Die Generatoren 41 sind über elektrische Leitungen mit dem Elektromotor 42 verbunden. Die Leitungen des elektrischen Systems 40 sind als Strich-Punkt-Linien dargestellt. Ergänzend kann vorgesehen sein, dass zumindest einer der Generatoren 41 des elektrischen Systems 40 ein elektrisches Kabinensystem (nicht gezeigt) und/oder eine Flugzeugbatterie (nicht gezeigt) mit Strom versorgt. Die Dampfturbine kann so vorteilhaft als Hilfsaggregat (engl. "auxiliary power unit) oder APU dienen. Es versteht sich, dass auch nur einer der beiden Generatoren 41 vorhanden sein kann. Auch die Pumpe 34 des Hilfskühlsystems 30 kann durch das elektrische System 40 mit Leistung versorgt werden und so betrieben werden.

Fig 6. zeigt ein sechstes Ausführungsbeispiel des Antriebssystem, in dem in der Zusatzgondel 50 in dem Luftstrom ein erster Zusatzverdichter 2' vor und/oder ein zweiter Zusatzverdichter 2" hinter dem Hilfskühler 31 angeordnet sind. Der Einfachheit halber sind die Komponenten des Dampfsystems 20 und die weiteren Komponenten des Kühlsystems, nämlich das Reservoir 33 und die Pumpe 34 nicht gezeigt.

Fig. 7 zeigt ein schematisch dargestelltes erstes Ausführungsbeispiel eines erfindungsgemäßen Flugzeugs 100 in einer Draufsicht. Gezeigt ist einer der beiden Flügel 101 des Flugzeugs 100, wobei an dem Flügel 101 das Flugtriebwerk 1 und eine der weiter oben in den Fig. 4 bis 6 beschriebene Zusatzgondel 50 mit einem Hilfskühler angeordnet ist. Die Zusatzgondel 50 ist in dem vorliegenden ersten Ausführungsbeispiel an einem Pylon 102 befestigt und über den Pylon 102 mit dem Flügel 101 verbunden. Vorteilhaft ist die Zusatzgondel 50 in Querrichtung Q weiter entfernt von einem Rumpf 103 des Flugzeugs 100 als das Flugtriebwerk 1.

Fig. 8 zeigt ein schematisch dargestelltes zweites Ausführungsbeispiel eines erfindungsgemäßen Flugzeugs 100 in einer Draufsicht. Gegenüber dem ersten Ausführungsbeispiel des Flugzeugs 100 ist die Zusatzgondel 50 unter dem Rumpf 103 des Flugzeugs 100 angeordnet.

Die Zusatzgondel 50 kann eine einzige Zusatzgondel 50 sein, deren Hilfskühler 31 über das Kühlmittel die Wärmetauscher 32 der Kühlsysteme 30 von zwei oder vier Flugtriebwerken 1 kühlt.

### Bezugszeichenliste

- 1: Gasturbine, Flugtriebwerk
- 1a: Einlauf
- 1b: Nebenstromkanal
- 1b': Nebenstromkanalauslass
- 1c: Kernstromkanal
- 1d: Triebwerksauslass
- 2: Verdichter
- 3: Brennkammer
- 4: Turbine
- 4b: Niederdruckturbine
- 5: Fan
- 6: Außengehäuse, Hauptgondel
- 7: Zwischengehäuse
- 8: Welle
- 8a: Triebwerksdrehachse
- 9: Getriebe

- 10: Antriebssystem

- 20: Dampfsystem
- 21: Wasserabscheidevorrichtung
- 22: Verdampfer
- 23: Dampfturbine

- 30: Hilfskühlkreislauf
- 31: Hilfskühler
- 32: Wärmetauscher, Kondensator
- 33: Reservoir
- 34: Pumpe
- 40: elektrisches System
- 41: Generator
- 42: Elektromotor

- 50: Zusatzgondel
- 51: Einlass der Zusatzgondel
- 52: Auslass der Zusatzgondel
- 53: Hilfsrotor

- 100: Flugzeug
- 101: Flügel
- 102: Pylon
- 103: Rumpf

- Ax: Axialrichtung
- R: Radialrichtung
- U: Umfangsrichtung

- L: Längsachse des Flugzeugs
- Q: Querachse des Flugzeugs

## Patentansprüche

1. Antriebssystem (10) mit
einer, insbesondere als Flugtriebwerk ausgebildeten Gasturbine (1), wobei die Gasturbine (1) einen Kernstromkanal (1c) aufweist, in dem in Strömungsrichtung zumindest ein Verdichter (2), insbesondere eine Mischkammer (3a), eine Brennkammer (3) und eine Turbine (4) angeordnet sind, und
einem Dampfsystem (20) zu einer Ausscheidung von Wasser aus einem Abgasstrom des Kernstromkanals (1c), zu einer Erzeugung von Wasserdampf und zu einer Förderung des Wasserdampfs, insbesondere über die Mischkammer (3a), in die Brennkammer (3),
**dadurch gekennzeichnet,**
**dass** das Dampfsystem (20) mit einem separaten Kühlsystem (30) gekoppelt ist, um durch Aufnahme und Abfuhr von Wärme zu der Ausscheidung des Wassers für die Erzeugung des Wasserdampfes aus einem Abgasstrom des Kernstromkanals (1c) beizutragen.

2. Antriebssystem (10) nach Anspruch 1, **dadurch gekennzeichnet, dass** das Kühlsystem (30) geschlossen ausgebildet ist.

3. Antriebssystem (10) nach Anspruch 1 oder 2, **dadurch gekennzeichnet, dass** das Dampfsystem (20) zumindest einen Verdampfer (22) aufweist, dass das Kühlsystem (30) einen Wärmetauscher (31) aufweist, und wobei der Wärmetauscher (31) in einem Abgasstrom des Kernstromkanals (1c) hinter oder neben dem Verdampfer (22) angeordnet ist.

4. Antriebssystem (10) nach einem der vorangehenden Ansprüche, **dadurch gekennzeichnet, dass** das Kühlsystem (30) ein Kühlmittel nutzt und einen Hilfskühler (32) zur Kühlung des Kühlmittels aufweist.

5. Antriebssystem (10) nach Anspruch 4, **dadurch gekennzeichnet, dass** der Hilfskühler (32) zur Kühlung des Kühlmittels in der Gasturbine (1) angeordnet ist.

6. Antriebssystem (10) nach Anspruch 5, **dadurch gekennzeichnet, dass** der Hilfskühler (32) in und/oder an dem Nebenstromkanal (1b) und/oder in und/oder an einem Rohrleitungssystem der Gasturbine (1) angeordnet ist.

7. Antriebssystem (10) nach Anspruch 4, **dadurch gekennzeichnet, dass** der Hilfskühler (32) zur Kühlung des Kühlmittels in einer externen Zusatzgondel (50) außerhalb der Gasturbine (1) angeordnet ist.

8. Antriebssystem (10) nach einem der Ansprüche 4 bis 7, **dadurch gekennzeichnet, dass** zumindest ein Zusatzrotor (53) zur Kühlung des Hilfskühlers (32) stromaufwärts und/oder stromabwärts des Hilfskühlers (32) angeordnet ist.

9. Antriebssystem (10) nach Anspruch 8, **dadurch gekennzeichnet, dass** der Hilfsrotor (53) von einer Dampfturbine (23) des Dampfsystems (20) angetrieben ist.

10. Antriebssystem (10) nach Anspruch 8, **dadurch gekennzeichnet, dass** der Hilfsrotor (53) von einem Elektromotor (42) angetrieben ist.

11. Antriebssystem (10) nach Anspruch 10, **dadurch gekennzeichnet, dass** der Elektromotor (42) an ein elektrisches System (40) angeschlossen und/oder Teil des elektrischen Systems (40) ist, dass das elektrische System (40) elektrisch von einem Generator (41) versorgt ist, und dass der Generator (41) von einer Dampfturbine (23) des Dampfsystems (20) und/oder von der Turbine (2) der Gasturbine (1) angetrieben ist.

12. Flugzeug (100) mit einem Antriebssystem (10) nach einem der vorangehenden Ansprüche, wobei die Gasturbine (1) ein Flugtriebwerk (1) ist.

13. Flugzeug (100) nach Anspruch 12 mit einem Antriebssystem (10) nach Anspruch 7 oder einen auf Anspruch 7 rückbezogenen Anspruch, umfassend einen Rumpf (103), **dadurch gekennzeichnet, dass** die Zusatzgondel (50) an oder unter dem Rumpf (101) angeordnet ist.

14. Flugzeug (100) nach Anspruch 12 mit einem Antriebssystem (10) nach Anspruch 7 oder einen auf Anspruch 7 rückbezogenen Anspruch, umfassend einen Flügel (101), **dadurch gekennzeichnet, dass** die Zusatzgondel (50) an oder unter dem Flügel (102), insbesondere an einem Pylon (102), angeordnet ist.

15. Flugzeug (100) nach Anspruch 14, **dadurch gekennzeichnet, dass** die Zusatzgondel (50) in Querrichtung (Q) weiter von einer Längsachse (L) des Flugzeugs (100) entfernt angeordnet ist als das Flugtriebwerk (1).
